# EUROPEAN PATENT SPECIFICATION

(11) **EP 2 405 153 B1**
(45) Date of publication and mention of the grant of the patent: **22.04.2015**
(21) Application number: 11172572.7
(22) Date of filing: 04.07.2011
(51) Int. Cl.: F16D 23/14

(54) **Clutch release bearing device**
Kupplungslagervorrichtung
Dispositif de roulement d'embrayage

(30) Priority: 05.07.2010 JP 2010152843
(43) Date of publication of application: 11.01.2012
(73) Proprietor: JTEKT CORPORATION, Osaka-shi Osaka 542-8502 (JP)
(72) Inventor: Suzuki, Akiyuki, Osaka-shi, Osaka 542-8502 (JP)
(74) Representative: Winter, Brandl, Fürniss, Hübner, Röss, Kaiser, Polte - Partnerschaft mbB

(56) References cited:
- WO-A1-2009/145216
- DE-A1-102008 006 656
- JP-A- 2010 112 532

## Description

The invention relates to a clutch release bearing device.

A clutch release bearing device is fitted to a clutch mechanism arranged between an engine and a transmission of a vehicle. When a clutch pedal is operated, the clutch release bearing device is moved in an axial direction via a release cylinder and a release fork or via a direct cylinder. Thus, a diaphragm spring is pressed to cancel press-contact between a clutch disc and a flywheel. As a result, transmission of power from the engine to the transmission is interrupted. For example, JP 2009 180309 A describes an outer ring rotation-type clutch release bearing device in which an outer ring rib of an outer ring is in contact with a diaphragm spring. In the clutch release bearing device described in JP-A-2009-180309 , as shown in FIG. 6, in order to prevent entry of muddy water, dust, and the like, by sealing a gap between an outer ring rib 335 of an outer ring 333 and an inner ring rib 342 of an inner ring 340, a seal member 360 is fitted to an outer peripheral surface of one end portion of the inner ring 340. The seal member 360 is formed of a rubber molding 362 in which a core metal 365 is embedded. The seal member 360 has a lip 363 and a lip 364. The lip 363 contacts an inner surface of the outer ring rib 335 of the outer ring 333. The lip 364 protrudes with a small gap left between an end of the lip 364 and a radially inner end surface of the outer ring rib 335.

The seal member 360 is produced in the following manner. First, the core metal 365 is formed by pressing. Next, the core metal 365 is placed inside a molding die having a shape corresponding to the seal member 360, and then rubber material is poured into the molding die. As a result, the rubber molding 362 in which the core metal 365 is embedded is produced. Therefore, a large number of man-hours are required to produce the seal member 360, which increases the cost. In addition, when a fitting cylindrical portion 361 of the seal member 360 is press-fitted to the outer peripheral surface of the one end portion of the inner ring 340, the seal member 360 may be fitted to the outer peripheral surface of the one end portion of the inner ring 340 in a tilted position due to unexpected deformation of a rubber layer present on an inner peripheral surface of the fitting cylindrical portion 361 of the seal member 360. In this case, the lip 364 may contact the radially inner end surface of the outer ring rib 335 or the lip 364 is excessively spaced apart from the radially inner end surface of the outer ring rib 335, which causes poor sealing performance.
In addition, a ball bearing for a clutch release bearing device is known comprising all the features of the pre-characterizing portion of claim 1 (see for example JP 2010 112532 A).

It is an object of the invention to provide a clutch release bearing device having a configuration that allows a seal member, which seals a gap between an outer ring rib of an outer ring and an inner ring rib of an inner ring, to be easily produced, and that allows the seal member to be fitted stably to an outer peripheral surface of one end portion of the inner ring, thereby favorably ensuring sealing performance.

An aspect of the invention relates to a clutch release bearing device that includes an inner ring, an outer ring, and a plurality of rolling elements arranged between the inner ring and the outer ring, wherein an outer ring rib is formed at one end portion of the outer ring so as to extend radially inward, an inner ring rib is formed at one end portion of the inner ring, with a gap left between the inner ring rib and the outer ring rib, so as to extend radially inward, and a seal member is arranged between the outer ring rib and the inner ring rib. The seal member is a single-piece member having a fitting cylindrical portion that is formed by pressing a thin steel plate and that is press-fitted to an outer peripheral surface of the one end portion of the inner ring, an annular portion that extends radially inward from one end portion of the fitting cylindrical portion along an outer side surface of the inner ring rib, and a cylindrical seal portion that protrudes from a radially inner end of the annular portion along a radially inner end surface of the outer ring rib with a small gap left between the cylindrical seal portion and the radially inner end surface of the outer ring rib, and that constitutes a labyrinth in cooperation with the radially inner end surface of the outer ring rib. The radially inner end surface of the outer ring rib has an inclined surface or a curved surface having a diameter that gradually increases outward from a portion that constitutes the labyrinth.

With the above configuration, it is possible to easily form the seal member that is a single-piece member having the fitting cylindrical portion, the annular portion and the cylindrical seal portion by pressing a thin steel plate, thereby reducing the cost. In addition, it is possible to stably fit the fitting cylindrical portion of the seal member to the outer peripheral surface of the one end portion of the inner ring through press-fitting. Therefore, it is possible to appropriately form a labyrinth using a small gap between the cylindrical seal portion of the seal member and the radially inner end surface of the outer ring rib. As a result, it is possible to favorably ensure sealing performance. Furthermore, the effect of shaking off muddy water, or the like, using a centrifugal force is obtained during rotation of the outer ring owing to the inclined surface or the curved surface formed at the radially inner end surface of the outer ring rib.

Features, advantages, and technical and industrial significance of exemplary embodiments of the invention will be described below with reference to the accompanying drawings, in which like numerals denote like elements, and wherein:
FIG 1 is a lorigitudinal sectional view that shows a clutch release bearing device according to an embodiment of the invention;
FIG. 2 is an enlarged longitudinal sectional view of the clutch release bearing device in
FIG. 1;

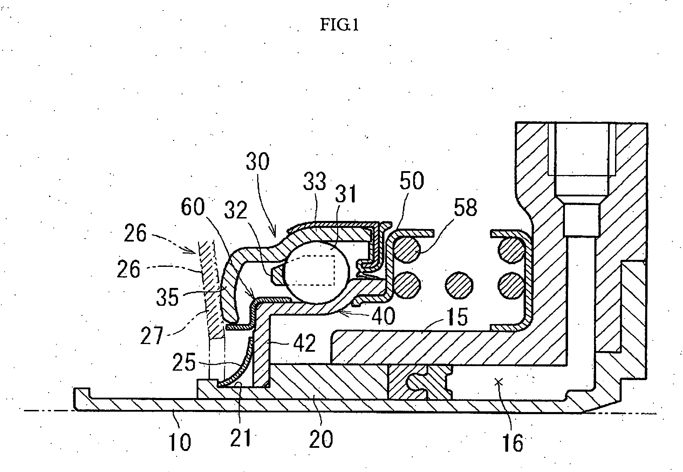

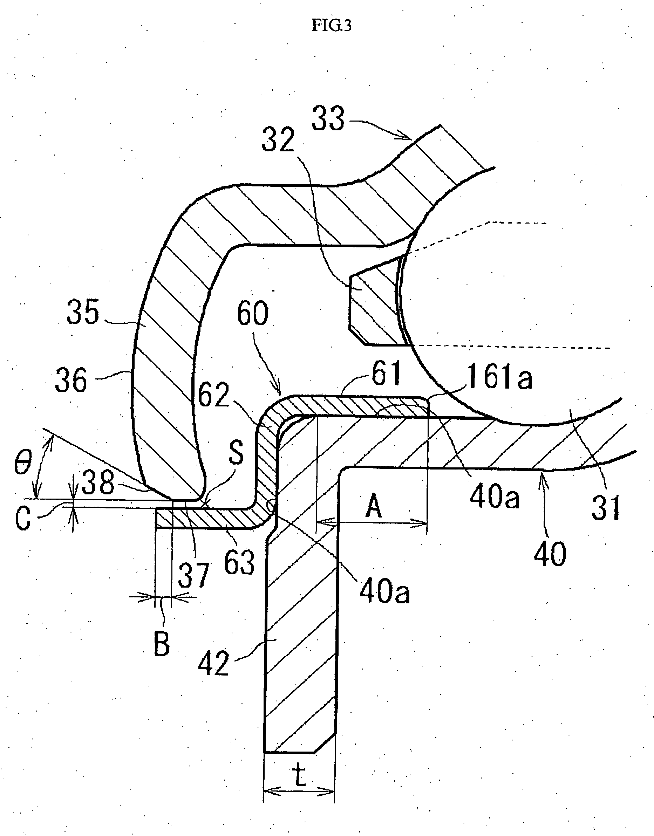

FIG. 3 is an enlarged longitudinal sectional view of a seal member that is placed between an outer ring rib and an inner ring rib and fitted to the inner ring in the clutch release bearing device shown in FIG. 1;

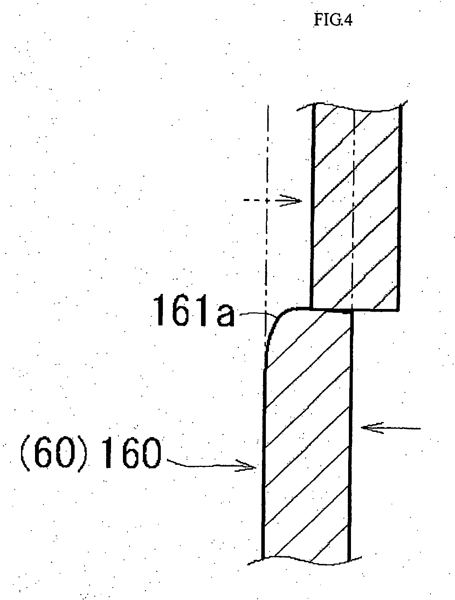

FIG. 4 is a view that illustrates a state where a thin steel plate for the seal member of the clutch release bearing device shown in FIG. 1 is stamped into an annular shape to form a primary workpiece;

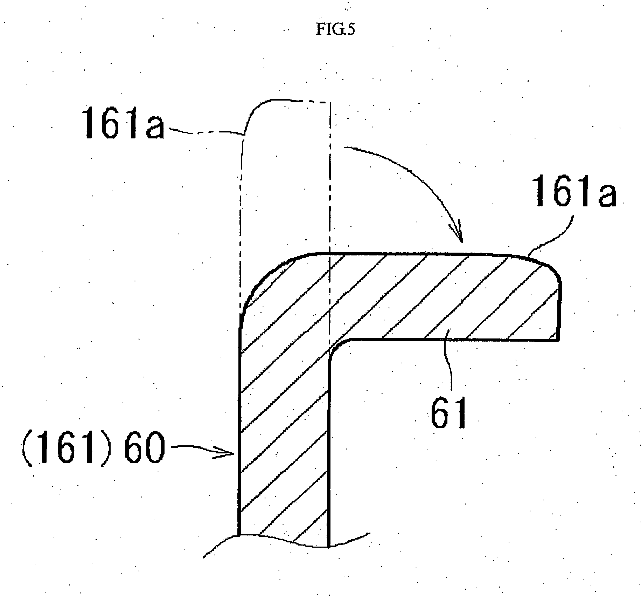

FIG 5 is a view that illustrates a state where the primary workpiece shown in FIG. 4 is drawn to produce the seal member; and

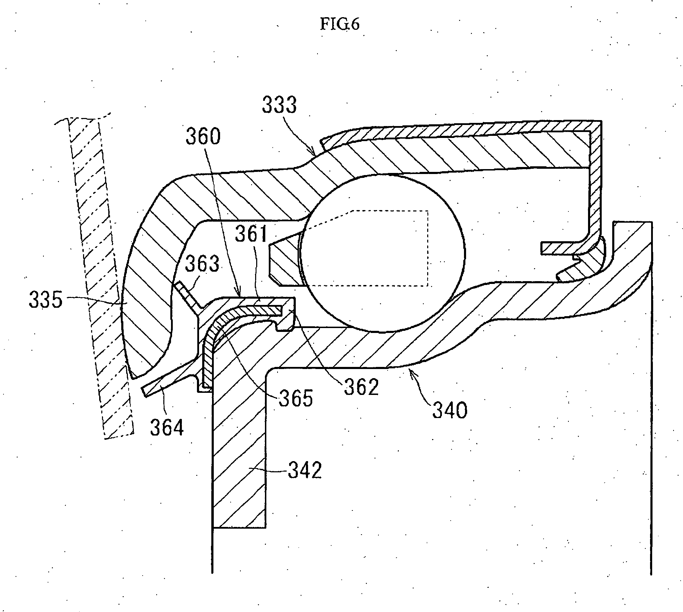

FIG. 6 is a longitudinal sectional view that shows an existing clutch release bearing device.

An embodiment of the invention will be described with reference to the accompanying drawings.

The embodiment of the invention will be described with reference to FIG. 1 to FIG. 5. A clutch release bearing device according to the embodiment is a hydraulic clutch release bearing device actuated by a direct cylinder. As shown in FIG. 1, an annular cylinder space 16 is formed between an inner cylinder element 10 and an outer cylinder element 15, and an annular piston 20 is fitted in the cylinder space 16. The inner cylinder element 10 is fitted to an outer peripheral surface of a clutch main shaft, and constitutes the direct cylinder. The annular piston 20 is actuated by hydraulic pressure supplied into the cylinder space 16. An annular groove 21 is formed in a tip end-side outer peripheral surface of a protruding portion of the annular piston 20, which protrudes from the cylinder space 16.

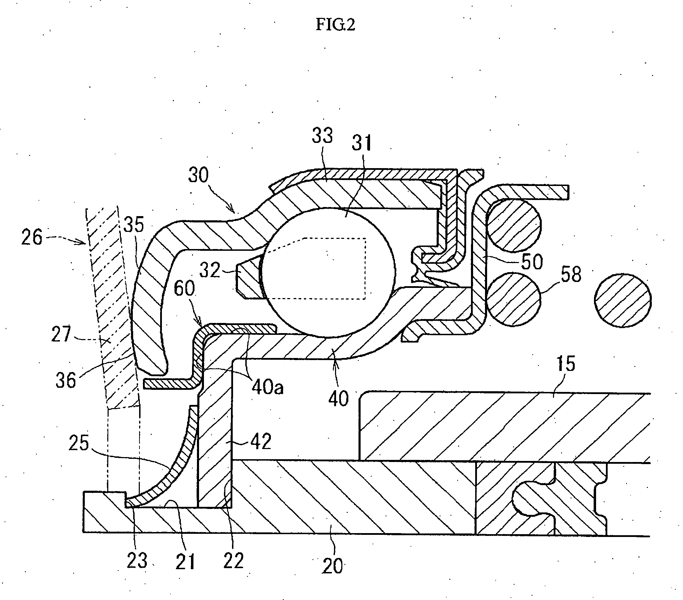

As shown in FIG. 1 and FIG. 2, a clutch release bearing 30 of the clutch release bearing device is arranged between the annular piston 20 and a diaphragm spring 26. The clutch release bearing 30 includes an outer ring 33, an inner ring 40 and balls 31. The inner ring 40 is concentrically arranged on the radially inner side of the outer ring 33. The balls 31 serve as a plurality of rolling elements, and are arranged rollably while being retained in an annular space between the outer ring 33 and the inner ring 40 by a cage 32. An outer ring rib 35 is formed at one end of the outer ring 33, and serves as a pressing portion that extends radially inward in a curved shape. A pressing surface 36 is formed in an outer surface of the outer ring rib 35. The pressing surface 36 presses a radially inner portion 27 of the diaphragm spring 26.

In addition, as shown in FIG. 3, an inner portion, which is a part of a radially inner end surface of the outer ring rib 35 of the outer ring 33 and which is further inward than a middle portion in the thickness direction of the outer ring rib 35, is formed in a cylindrical surface 37 that is parallel to the axial direction in order to constitute a labyrinth (noncontact seal portion) in cooperation with a seal member 60 (described below). In addition, an inclined surface 38 or a curved surface is formed in the radially inner end surface of the outer ring rib 35. The diameter of the inclined surface 38 or the curved surface is gradually increased outward from the middle portion in the thickness direction of the outer ring rib 35. When the inclined surface 38 is formed in the radially inner end surface of the outer ring rib 35, an inclination angle θ of the inclined surface 38 8 with respect to the axial direction is desirably set to a value within a range from 5° to 45°, and more desirably set to a value within a range from 15° to 16° in order to obtain the effect of shaking off muddy water, or the like, using a centrifugal force. That is, if the inclination angle θ is smaller than 5°, the effect of shaking off muddy water, or the like, using a centrifugal force reduces. On the other hand, if the inclination angle θ is larger than 45°, the amount of cut increases, and the area of the pressing surface against another member (for example, diaphragm spring) may reduce or an edge formed at the boundary between the inclined surface 38 and the pressing surface 36 may sometimes contact another member.

As shown in FIG. 2, an inner ring rib 42 is formed at one end portion of the inner ring 40 of the clutch release bearing 30. The inner ring rib 42 extends radially inward with a predetermined gap left between the inner ring rib 42 and the outer ring rib 35 of the outer ring 33. In addition, a radially inner end of the inner ring rib 42 of the inner ring 40 is arranged with an annular gap for alignment left between the radially inner end and a bottom surface (radially outer surface) of the annular groove 21 of the annular piston 20. Further, a coned disc spring-shaped aligning spring 25 is arranged between one side wall surface 23 of the annular groove 21 and the inner ring rib 42. Then, one side surface of the inner ring rib 42 is kept in contact with a pressed surface 22, that is, the other side wall surface of the annular groove 21, by an elastic force of the aligning spring 25. That is, if radial eccentricity is caused between the diaphragm spring 26 and the clutch release bearing 30, the clutch release bearing 30 is moved relative to the diaphragm spring 26 in the radial direction via the aligning spring 25. Thus, the clutch release bearing 30 is aligned with respect to the diaphragm spring 26. In addition, a spring receiving element 50 is provided at the other end of the inner ring 40. The spring receiving element 50 receives a spring force of a pressing spring 58 that presses the inner ring 40 toward the diaphragm spring 26. In addition, a range 40a of the inner ring 40, extending from the outer peripheral surface of one end portion of the inner ring 40 to a base portion of the inner ring rib 42 (range at which the seal member 60 (described later) is fitted), is desirably finished by being polished with high accuracy.

As shown in FIG 3, the seal member 60 made of metal is arranged between the outer ring rib 35 and the inner ring rib 42. The seal member 60 is formed by pressing a thin steel plate. The seal member 60 is a single-piece member having a fitting cylindrical portion 61, an annular portion 62 and a cylindrical seal portion 63. The seal member 60 is formed in a stepped shape in longitudinal section. The fitting cylindrical portion 61 is press-fitted to the outer peripheral surface of the one end portion of the inner ring 40. The annular portion 62 extends radially inward from one end portion of the fitting cylindrical portion 61 along the outer side surface of the inner ring rib 42. The cylindrical seal portion 63 protrudes from the radially inner end of the annular portion 62 along the cylindrical surface 37 of the radially inner end surface of the outer ring rib 35 with a small gap left between the cylindrical seal portion 63 and the cylindrical surface 37. The cylindrical seal portion 63 constitutes a labyrinth in cooperation with the cylindrical surface 37 of the outer ring rib 35.

In addition, in the embodiment, the seal member 60 is formed by pressing such that a shear drop 161 a formed through stamping is located in the outer peripheral surface of the end portion of the fitting cylindrical portion 61 of the seal member 60. That is, as shown in FIG. 4, a thin steel plate for forming the seal member 60 is stamped into an annular shape to form a primary workpiece 160. At this time, the shear drop 161 a is formed at the outer peripheral portion at one side of the primary workpiece 160. After that, as shown in FIG. 5, the primary workpiece 160 is drawn such that the shear drop 161 a formed at the outer peripheral portion at one side of the primary workpiece 160 is located in the outer peripheral surface of the end portion of the fitting cylindrical portion 61. In this way, the seal member 60 is produced.

As shown in FIG. 3, in a fixed state where the fitting cylindrical portion 61 1 of the seal member 60 is press-fitted to the outer peripheral surface of one end portion of the inner ring 40 up to such a position that the annular portion 62 of the seal member 60 contacts the inner ring rib 42 of the inner ring 40, the length A of a press-fitted portion of the fitting cylindrical portion 61 of the seal member 60 is desirably larger than or equal to 1 mm and is more desirably larger than the thickness t of the inner ring rib 42. In addition, the overlap length B between the end portion of the cylindrical seal portion 63 of the seal member 60 and the inclined surface 38 of the outer ring rib 35 of the outer ring 33 is desirably set to be larger than or equal to 0.0 mm or set to a value within a range from 0.0 mm to 1.1 mm, and is more desirably set to a value within a range from 0.08 mm to 0.91 1 mm. Furthermore, the size C of a small gap S between the outer peripheral surface of the cylindrical seal portion 63 and the cylindrical surface 37 of the radially inner end surface of the outer ring rib 35 is desirably set to a value within a range from 0.1 mm to 1.0 mm, and is more desirably set to a value within a range from 0.14 mm to 0.74 mm.

The clutch release bearing device according to the embodiment is configured as described above. Thus, the seal member 60 that is a single-piece member having the fitting cylindrical portion 61, the annular portion 62 and the cylindrical seal portion 63, and that has a stepped shape in longitudinal section may be easily formed by pressing a thin steel plate. Therefore, it is possible to reduce the cost. In addition, it is possible to stably fit the fitting cylindrical portion 61 of the seal member 60 to the outer peripheral surface of one end portion of the inner ring 40 through press-fitting. Therefore, it is possible to appropriately form a labyrinth (noncontact seal portion) using a small gap S between the outer peripheral surface of the cylindrical seal portion 63 of the seal member 60 and the cylindrical surface 37 of the radially inner end surface of the outer ring rib 35. As a result, it is possible to favorably ensure sealing performance. Furthermore, the effect of shaking off muddy water, or the like, using a centrifugal force is obtained during rotation of the outer ring 33 owing to the inclined surface 38 or a curved surface formed in the radially inner end surface of the outer ring rib 35.

In addition, in the embodiment, the shear drop 161a formed through stamping is located in the outer peripheral surface of the end portion of the fitting cylindrical portion 61 of the seal member 60. Therefore, it is possible to watertightly press-fit the fitting cylindrical portion 61 without forming a gap, caused by the shear drop 161a, between the outer peripheral surface of one end portion of the inner ring 40 and the inner peripheral surface of the fitting cylindrical portion 61 of the seal member 60. That is, if a shear drop is located in the inner peripheral surface of the end portion of the fitting cylindrical portion 61, a gap may be formed due to the shear drop between the outer peripheral surface of one end portion of the inner ring 40 and the inner peripheral surface of the fitting cylindrical portion 61 of the seal member 60, and the seal member 60 may be fitted to the inner ring 40 unstably or poor sealing may occur due to the gap. However, it is possible to prevent such a problem with the above-described configuration.

Note that the invention is not limited to the above embodiment; and the invention may be implemented in various forms without departing from the scope of the invention.

## Claims

1. A clutch release bearing device that includes an inner ring (40), an outer ring (33) and a plurality of rolling elements (31) arranged between the inner ring (40) and the outer ring (33), wherein an outer ring rib (35) is formed at one end portion of the outer ring (33) so as to extend radially inward, an inner ring rib (42) is formed at one end portion of the inner ring (40), with a gap left between the inner ring rib (42) and the outer ring rib (35), so as to extend radially inward, and a seal member (60) is arranged between the outer ring rib (35) and the inner ring rib (42), wherein::
the seal member (60) has a fitting cylindrical portion (61) that is formed by pressing a thin steel plate and that is press-fitted to an outer peripheral surface of the one end portion of the inner ring (40), an annular portion (62) that extends radially inward from one end portion of the fitting cylindrical portion (61) along an outer side surface of the inner ring rib (42), and a cylindrical seal portion (63) that protrudes from a radially inner end of the annular portion (62) along a radially inner end surface of the outer ring rib (35) with a small gap left between the cylindrical seal portion (63) and the radially inner end surface of the outer ring rib (35), and that constitutes a labyrinth in cooperation with the radially inner end surface of the outer ring rib (35); **characterized in that**
the seal member (60) is a single-piece member, and
the radially inner end surface of the outer ring rib (35) has an inclined surface (38) or a curved surface having a diameter that gradually increases outward from a portion that constitutes the labyrinth.

2. The clutch release bearing device according to claim 1, wherein
the seal member (60) is formed by pressing such that a shear drop (161 a) formed through stamping is located in an outer peripheral surface of an end portion of the fitting cylindrical portion (61) of the seal member (60).

## Patentansprüche

1. Kupplungsausrücklager mit einem Innenring (40), einem Außenring (33) und einer zwischen dem Innenring (40) und dem Außenring (33) angeordneten Mehrzahl an Rollelementen (31), worin eine Außenringrippe (35) an einem Endabschnitt des Außenrings (33) so ausgebildet ist, dass sie sich radial nach innen erstreckt, eine Innenringrippe (42) an einem Endabschnitt des Innenrings (40) so ausgebildet ist, dass sie sich radial nach innen erstreckt und ein Spalt zwischen der Innenringrippe (42) und der Außenringrippe (35) bleibt, und ein Dichtungsteil (60) zwischen der Außenringrippe (35) und der Innenringrippe (42) angeordnet ist, worin:
das Dichtungsteil (60) einen zylindrischen Passungsabschnitt (61) hat, welcher durch das Pressen einer dünnen Stahlplatte ausgeformt und auf eine äußere periphere Oberfläche des einen Endabschnitts des Innenrings (40) aufgepresst wird, ein ringförmiger Abschnitt (62) sich von einem Endabschnitt des zylindrischen Passungsabschnitts (61) entlang einer äußeren seitlichen Oberfläche der Innenringrippe (42) radial nach innen erstreckt, und ein zylindrischer Dichtungsabschnitt (63) von einem radial inneren Ende des ringförmigen Abschnitts (62) entlang einer radial inneren Endoberfläche der Außenringrippe (35) hervorsteht, wobei ein kleiner Spalt zwischen dem zylindrischen Dichtungsabschnitt (63) und der radial inneren Endoberfläche der Außenringrippe (35) bleibt, und der zusammen mit der radial inneren Endoberfläche der Außenringrippe (35) ein Labyrinth bildet; **dadurch gekennzeichnet, dass**
das Dichtungsteil (60) als ein Einstück-Teil ausgebildet ist, und
die radial innere Endoberfläche der Außenringrippe (35) eine schräge Oberfläche (38) oder eine gekrümmte Oberfläche hat, die einen Durchmesser hat, der allmählich von einem Abschnitt, der das Labyrinth ausformt, zunimmt.

2. Kupplungsausrücklager gemäß Anspruch 1, worin
das Dichtungsteil (60) durch Pressen so ausgeformt wird, dass sich ein durch Druckumformen (stamping) ausgebildeter Scherversatz (shear drop) (161 a) an einer äußeren Umfangsoberfläche eines Endabschnitts des zylindrischen Passungsabschnitts (61) des Dichtungsteils (60) befindet.

## Revendications

1. Dispositif de butée de débrayage qui inclut une bague intérieure (40), une bague extérieure (33) et une pluralité d'éléments roulants (31) agencés entre la bague intérieure (40) et la bague extérieure (33), dans lequel une nervure de bague extérieure (35) est formée en une partie d'extrémité de la bague extérieure (33) de façon à s'étendre radialement vers l'intérieur, une nervure de bague intérieure (42) est formée en une partie d'extrémité de la bague intérieure (40), avec un jeu laissé entre la nervure de bague intérieure (42) et la nervure de bague extérieure (35), de façon à s'étendre radialement vers l'intérieur, et un élément d'étanchéité (60) est agencé entre la nervure de bague extérieure (35) et la nervure de bague intérieure (42), dans lequel :
l'élément d'étanchéité (60) comporte une partie cylindrique d'ajustement (61) qui est formée en pressant une plaque d'acier fine et qui est ajustée à la presse sur une surface périphérique extérieure de l'une partie d'extrémité de la bague intérieure (40), une partie annulaire (62) qui s'étend radialement vers l'intérieur depuis une partie d'extrémité de la partie cylindrique d'ajustement (61) le long d'une surface latérale extérieure de la nervure de bague intérieure (42), et une partie d'étanchéité cylindrique (63) qui fait saillie depuis une extrémité radialement intérieure de la partie annulaire (62) le long d'une surface d'extrémité radialement intérieure de la nervure de bague extérieure (35) avec un petit jeu laissé entre la partie d'étanchéité cylindrique (63) et la surface d'extrémité radialement intérieure de la nervure de bague extérieure (35), et qui constitue un labyrinthe en coopération avec la surface d'extrémité radialement intérieure de la nervure de bague extérieure (35) ; **caractérisé en ce que**
l'élément d'étanchéité (60) est un élément d'un seul bloc, et
la surface d'extrémité radialement intérieure de la nervure de bague extérieure (35) comporte une surface inclinée (38) ou une surface courbée ayant un diamètre qui augmente progressivement vers l'extérieur depuis une partie qui constitue le labyrinthe.

2. Dispositif de butée de débrayage selon la revendication 1, dans lequel
l'élément d'étanchéité (60) est formé par pression de telle manière qu'une chute de cisaillement (161a) formée par estampage est située dans une surface périphérique extérieure d'une partie d'extrémité de la partie cylindrique d'ajustement (61) de l'élément d'étanchéité (60).
